# EUROPÄISCHE PATENTSCHRIFT

(11) **EP 3 501 801 B1**
(45) Veröffentlichungstag und Bekanntmachung des Hinweises auf die Patenterteilung: **17.03.2021**
(21) Anmeldenummer: 18208138.0
(22) Anmeldetag: 23.11.2018
(51) Int. Cl.: B29C 65/02, B29C 65/34, B29C 65/08, B29C 65/00, B29C 69/00, B29C 70/00, B29C 65/82, B29L 31/30

(54) **VERFAHREN ZUM HERSTELLEN EINES FAHRZEUGBAUTEILS AUS EINEM FASERVERSTÄRKTEN KUNSTSTOFF**
METHOD FOR PRODUCING A VEHICLE COMPONENT FROM A FIBRE-REINFORCED PLASTIC
PROCÉDÉ DE FABRICATION D'UN COMPOSANT DE VÉHICULE À PARTIR D'UNE MATIÈRE PLASTIQUE RENFORCÉE PAR DES FIBRES

(30) Priorität: 21.12.2017 DE 102017130927
(43) Veröffentlichungstag der Anmeldung: 26.06.2019
(73) Patentinhaber: Airbus Operations GmbH, 21129 Hamburg (DE)
(72) Erfinder: Linde, Peter, 21129 Hamburg (DE)

(56) Entgegenhaltungen:
- US-A1- 2016 136 879
- US-A1- 2017 355 152
- CAMPBELL F C ED - CAMPBELL FLAKE C: "Manufacturing processes for advanced composites, Chapter 10 (Thermoplastic Composites: An Unfulfilled Promise)", 1. Januar 2004 (2004-01-01), MANUFACTURING PROCESSES FOR ADVANCED COMPOSITES, ELSEVIER ADVANCED TECHNOLOGY, OXFORD, GB, PAGE(S) 1 - 41, XP002615944, ISBN: 978-1-85617-415-2 * Seite 360 * * Seite 391 - Seite 394 *

## Beschreibung

### TECHNISCHES GEBIET

Die Erfindung betrifft ein Verfahren zum Herstellen eines Fahrzeugbauteils aus einem faserverstärkten Kunststoff, sowie ein Fahrzeugbauteil bzw. ein Fahrzeug mit einem derartigen Fahrzeugbauteil.

### HINTERGRUND DER ERFINDUNG

Größere Fahrzeuge und insbesondere Verkehrsflugzeuge werden zunehmend mithilfe von Bauteilen aus einem faserverstärkten Kunststoff hergestellt. Die Bauteile sind insbesondere bei Verkehrsflugzeugen oft großformatig, um den Aufwand des Verbindens mehrerer Bauteile zu verringern. Bei der Verwendung großformatiger Bauteile aus faserverstärkten Kunststoffen können jedoch gelegentlich Formabweichungen oder nachzuarbeitende Oberflächen entstehen. Werden etwa Hautfelder mit Versteifungsbauteilen ausgestattet, werden gelegentlich Vorformen eines Hautfeldes und Vorformen von Versteifungsbauteilen gemeinsam auf ein Formwerkzeug gelegt, um anschließend gemeinsam in einem Autoklaven zum Erhärten aufgewärmt werden. Durch unterschiedliche Schichtdicken kann es zu einer unterschiedlich raschen Abkühlung nach dem Erwärmen kommen. Beispielsweise ist ein Versteifungsbauteil in einem Verbindungsbereich noch nicht gänzlich abgekühlt, während benachbarte Hautfelder ohne Versteifungsbauteil bereits vollständig abgekühlt sind. Hierdurch kann es zu unterschiedlichen Ausdehnungen kommen, welche sich als eine gewisse Welligkeit auf die äußere Oberfläche niederschlagen.

Des Weiteren kann bei faserverstärkten Kunststoffen geschehen, dass Fasern, welche in die Matrix eingebettet werden, teilweise übereinanderliegen oder nicht gänzlich gerade ausgerichtet sind. Hierdurch ergibt sich eine relativ feine, jedoch bemerkbare Welligkeit.

Verbindungsverfahren für faserverstärkte Kunststoffe insbesondere in der Luftfahrtindustrie basieren oft auf der Verwendung von Nieten. Es ist gelegentlich nicht auszuschließen, dass derartige Nietverbindungen zu sichtbaren Nieten an der Außenfläche des hergestellten Bauteils führen.

Diese drei Arten von Formabweichungen können durch verschiedene Maßnahmen behoben werden. Diesen ist gemein, zusätzlich dünne Schichten eines Materials zumindest lokal aufzutragen, um anschließend die gesamte Oberfläche des Bauteils materialabtragend zu behandeln. Dies kann mühsam sein und weiterhin das Gewicht des hergestellten Bauteils erhöhen. Handelt es sich bei diesem um eine Komponente eines Luftfahrzeugs, sollte dies nach Möglichkeit verhindert werden.

US 2016/136879 A1 offenbart ein Suzeptorschweißband zur Verwendung beim thermoplastischen Schweißen, wobei das Band eine thermoplastische Folie umfasst; eine Vielzahl von nicht durchgehenden Suzeptorleitern, die in die thermoplastische Folie eingebettet sind, wobei die Leiter es ermöglichen, eine resultierende durch das Suzeptorschweißband gebildete thermoplastische Schweißnaht auf eine gewünschte technische Charakteristik abzustimmen.

Die Monografie "Manufacturing Processes for Advanced Composites", Oxford, 2004 offenbart in einem Beitrag von Campbell und Campbell in Kapitel 10 einen Überblick zum Thema thermoplastische Verbundwerkstoffe einschließlich ihrer Verbindungstechniken.

US 2017 355152 offenbart ein Verfahren zur Integration einer Hinterbaustruktur-Baugruppe in eine Struktur eines Luft- oder Raumfahrzeugs mit den Schritten: Bereitstellen der einzelnen Elemente für die Hinterbaustruktur-Baugruppe und Bereitstellen eines Hautabschnitts für die Struktur; Anordnen der Elemente auf einer Vormontagevorrichtung, welche Halteeinrichtungen aufweist, die jeweils dafür eingerichtet sind, eines der Elemente hinsichtlich Position und/oder Lage einstellbar zu halten; und Verbinden einiger oder aller der Elemente mit dem Hautabschnitt; wobei durch Einstellen der Halteeinrichtungen zum Toleranzausgleich Spalte zwischen Fügebereichen der Elemente und dem Hautabschnitt beseitigt oder eingestellt werden.

### ZUSAMMENFASSUNG DER ERFINDUNG

Es wäre wünschenswert, über ein Verfahren zu verfügen, insbesondere großformatige Bauteile aus einem faserverstärkten Kunststoff herzustellen, das nicht zu den genannten Formabweichungen führt.

Folglich ist eine Aufgabe der Erfindung, ein Verfahren zum Herstellen eines Bauteils aus einem faserverstärkten Kunststoff vorzuschlagen, bei dem ohne zusätzliches Auftragen von Material eine besonders vorteilhafte Bauteil- und Oberflächenqualität hergestellt werden kann.

Die Aufgabe wird gelöst durch ein Verfahren mit den Merkmalen des unabhängigen Anspruchs 1. Vorteilhafte Weiterbildungen und Ausführungsformen sind den Unteransprüchen und der nachfolgenden Beschreibung zu entnehmen.

Es wird ein Verfahren zum Herstellen eines Fahrzeugbauteils aus einem faserverstärkten Kunststoff vorgeschlagen. Das Verfahren weist die Schritte des Bereitstellens mindestens eines Hautfeldes mit einer Innenseite, einer Außenseite und einem an der Innenseite angeordneten Aufnahmeabschnitt, wobei das Hautfeld aus einem faserverstärkten, thermoplastischen Werkstoff besteht, des Bereitstellens mindestens eines Versteifungsbauteils mit einer Verbindungsfläche, wobei das Versteifungsbauteil aus einem faserverstärkten, thermoplastischen Werkstoff besteht, des Kontaktierens des mindestens einen Versteifungsbauteils und des mindestens einen Hautfeldes, so dass die Verbindungsfläche auf dem Aufnahmeabschnitt liegt, des flächigen Erwärmens einer Fügezone, in der die Verbindungsfläche des Versteifungsbauteils und der Aufnahmeabschnitt liegen, so dass das mindestens eine Versteifungsbauteil und das mindestens eine Hautfeld miteinander verschweißt werden, des Abkühlens der Fügezone, des Vergleichens einer ermittelten Geometrie der Kombination aus Versteifungsbauteil und Hautfeld mit einer vorgebbaren Geometrie, und des erneuten Erwärmens der Fügezone, Verformen des Versteifungsbauteils und des Hautfeldes und Abkühlen zum Erreichen der vorgebbaren Geometrie auf, falls die ermittelte Geometrie von der vorgebbaren Geometrie abweicht.

Grundsätzlich weicht das Verfahren von bekannten Verfahren dadurch ab, dass statt eines faserverstärkten, auf Duromeren basierenden Werkstoffs ein thermoplastischer Werkstoff mit Verstärkungsfasern verwendet wird. Die geeigneten thermoplastischen Materialien zur Realisierung der Matrix können PPS (Polyphenylensulfid), PEEK (Polyetheretherketon), PEKK (Polyetherketonketon) oder andere umfassen. Die Verstärkungsfasern können weiterhin abhängig von dem Einsatzzweck ausgewählt werden und beispielhaft Kohlenstofffasern, Glasfasern, Aramidfasern, Kevlarfasern und dergleichen umfassen.

Diese Materialverwendung führt zu besonderen Vorteilen hinsichtlich der Korrigierbarkeit eventueller Formabweichungen. Bei Duromer-Materialien können Verstärkungsfasern in eine flüssige oder pastöse Komponente eingebettet werden, welche aus einem Harzsystem besteht. Nach dem Aushärten des Harzes können dort keine Formkorrekturen mehr vorgenommen werden. Der Vorgang des Aushärtens ist irreversibel und es müssen bestimmte Vorkehrungen getroffen werden, dass bei dem Aushärten des Harzes die gewünschte Form erreicht bzw. beibehalten wird.

Durch die Verwendung eines thermoplastischen Werkstoffs zum Einbetten von Verstärkungsfasern ist jedoch eine nachträgliche Korrektur der Geometrie möglich. Wird im eingangs erwähnten Beispiel ein Versteifungsbauteil mit einer Innenseite eines Hautfeldes durchgeführt, kann theoretisch auch bei der Verwendung eines thermoplastischen, faserverstärkten Kunststoffs beim Aushärten eine bestimmte Formabweichung entstehen. Diese wird erfindungsgemäß jedoch dadurch behoben, dass nach Feststellung einer Abweichung von einer Soll-Geometrie eine erneute, lokale Erwärmung durchgeführt werden kann, um mechanisch den Verbund aus Versteifungsbauteil und Hautfeld in die gewünschte Soll-Geometrie zu ändern. Der Vorgang des Erhärtens ist bei einem thermoplastischen Werkstoff vollkommen reversibel.

Das vorgeschlagene Verfahren weist jedoch auch den besonderen Vorteil auf, dass auf Nietverbindungen praktisch gänzlich verzichtet werden kann. Aufgrund der reversiblen Erhärtung des Materials kann auch lokal Material aufgeschmolzen werden, so dass sich die aufgeschmolzenen Bereiche zweier miteinander in Verbindung zu bringender Bauteile durchsetzen, so dass daraus praktisch ein monolithisches Bauteil resultiert. Für die Herstellung einer Verbindung müssen folglich keine Nietverbindungen durch Bohren, Entgraten, Reinigen, Abdichten, Einbringen des Nietkörpers und Verformen des Nietkörpers hergestellt werden. Es reicht eine lokale Erwärmung aus, durch die die beiden betreffenden Fügepartner - insbesondere unter zusätzlicher Einwirkung einer Anpresskraft - eine stoffschlüssige Verbindung eingehen können.

Durch das lokale, flächige Erwärmen eines Verbindungsbereichs zwischen den zu verbindenden Komponenten kann überdies die gesamte Erwärmung des Verbundes aus Hautfeld und Versteifungsbauteil auf einen sehr kleinen Bereich, das heißt ein recht geringes Volumen, eingeschränkt werden. Hierdurch entstehen per se deutlich geringere Ausdehnungseffekte aufgrund von Temperaturgefällen in dem Bauteil.

Das Erwärmen sollte auf eine sehr dünne Schicht begrenzt werden, um diesen Vorteil auszunutzen. Der Verbindungsbereich kann durch induktive Verfahren, die Verwendung von Heizwiderständen oder durch Transmission erwärmt werden, wobei die Integration einer Heizschicht an eines der miteinander zu verbindenden Bauteile zu bevorzugen ist.

Folglich kann durch das erfindungsgemäße Verfahren das Verwenden von Nieten eingeschränkt bzw. aufgehoben werden. Die dadurch hervorgerufene unebene Oberfläche durch abstehende Nietköpfe oder ähnliches können vermieden werden. Gleichzeitig können erwärmungsbedingte Welligkeiten der hergestellten Bauteile deutlich reduziert und des Weiteren deutlich einfacher behoben werden. Ein zusätzlicher Materialauftrag auf eine äußere Oberfläche des hergestellten Bauteils ist folglich nicht erforderlich.

An dieser Stelle sei darauf hingewiesen, dass der Aufnahmeabschnitt an der Innenseite des Hautfeldes keine besondere Ausgestaltung aufweisen muss. Vielmehr kann dieser Aufnahmeabschnitt ein definierter Flächenbereich sein, in dem die Verbindungsfläche des mindestens einen Versteifungsbauteils aufgelegt wird. Des Weiteren ist die Verbindungsfläche des mindestens einen Versteifungsbauteils im einfachsten Fall lediglich eine Fläche, deren Verlauf mit dem Aufnahmeabschnitt korrespondiert. Die Verbindungsfläche dient lediglich dazu, einen bündigen Flächenkontakt zwischen dem mindestens einen Versteifungsbauteil und dem mindestens einen Hautfeld herzustellen, um anschließend durch lokales Erwärmen ein Verschweißen hervorzurufen.

In einer vorteilhaften Ausführungsform weist das Bereitstellen des mindestens einen Hautfeldes das parallele Ausbreiten von Verstärkungsfasern und das Einbetten der Verstärkungsfasern in einem thermoplastischen Matrixmaterial auf. Dies ist so zu verstehen, dass ein Faserbündel hierzu durch mechanisches Durchkämmen oder einen ähnlichen Vorgang zu einer flachen Lagenanordnung mit zueinander parallelen Verstärkungsfasern aufgearbeitet werden kann. Durch das Durchkämmen der Verstärkungsfasern können diese insbesondere in vorbestimmten Abständen und mit einer präzise eingestellten Ausrichtung und einer vorbestimmten Lagendicke in das Matrixmaterial eingebettet werden. Beispielsweise kann eine solche flache Lagenanordnung mit parallelen Fasern in einem thermoplastischen Harz als dünne schmale ungewebte Bänder oder Gewebelagen bereitgestellt werden. Diese können anschließend zu einem größeren Hautfeld auf einem entsprechenden Formwerkzeug mit gewünschten Faserrichtungen abgelegt und miteinander verbunden werden. Dadurch kann das Überlappen unterschiedlicher Mengen von Verstärkungsfasern unterdrückt werden, was zu die feine Welligkeit des hergestellten Bauteils eliminieren kann.

In jeder Ausführungsform der Erfindung wird weiterhin der Schritt des Auflegens einer leitfähigen Schicht auf die Verbindungsfläche und/oder den Aufnahmeabschnitt durchgeführt, wobei das flächige Erwärmen das Anlegen einer Spannung über die leitfähige Schicht beinhaltet. Die leitfähige Schicht dient insbesondere als Widerstandsheizschicht. Sie kann als eine Folie oder ein Gewebe ausgeführt sein. Das Material dieser Schicht soll ausreichend leitfähig sein und kann insbesondere aus einem metallischen Material bestehen und/oder einen größeren Anteil Kohlenstoff enthalten. Es ist sinnvoll, Anschlussleitungen, Anschlusspunkte oder ähnliches zu definieren, die mit der leitfähigen Schicht verbunden sind und aus dem Verbindungsbereich herausragen, so dass die elektrisch leitfähige Schicht mit einer externen Spannungsquelle kontaktierbar ist. Die Schicht ist dazu vorgesehen, durch Anlegen einer Spannung einen Stromfluss durch die Schicht zu initiieren, der aufgrund des elektrischen Widerstands der Schicht zu ihrer Erwärmung führt. Dadurch lassen sich gezielt nur die Verbindungsfläche und der Aufnahmeabschnitt erwärmen. Die Schicht sollte hierbei so fein wie möglich ausgeführt sein, so dass ein anschließendes Verbleiben in dem hergestellten Bauteil nur zu einer vernachlässigbaren Gewichtserhöhung führt. Allerdings sollte die Schicht auch derart dimensioniert sein, dass eine ausreichende Heizleistung realisierbar ist. Generell könnte bei dieser Ausführungsform darauf geachtet werden, dass die Spannung und/oder die sich einstellende Stromstärke bei der Erhitzung der leitfähigen Schicht überwacht oder begrenzt wird, so dass einer Beschädigung der leitfähigen Schicht vorgebeugt werden kann.

Die leitfähige Schicht kann in Form eines Netzes aus linienförmigen Elementen aus einem Kohlenstoff enthaltenden Material hergestellt sein. Hierzu könnten etwa Kohlenstofffasern oder Carbon-Nanoröhrchen in Betracht gezogen werden. Mit den linienförmigen Elementen könnten quadratische, rechteckige oder anders regelmäßig geformte Maschen gebildet werden. Hierdurch kann maschenweise eine Erwärmung des Verbindungsbereichs durchgeführt werden. Dadurch wird, je nach Größe der Maschen, der gesamte Verbindungsbereich erwärmt. Die umschlossene Fläche muss nicht mit Material ausschließlich zum Zwecke des Erwärmens ausgefüllt sein.

In einer besonders vorteilhaften Ausführungsform besteht die leitfähige Schicht aus einem Netz aus Karbon-Nanoröhrchen, welche eine besonders hohe Zugfestigkeit und eine für die Zwecke des Erwärmens ausreichende elektrische Leitfähigkeit aufweisen. Das Integrieren eines solchen Netzes führt zu deutlichen Gewichtsvorteilen, denn das zusätzlich eingebrachte Gewicht aufgrund dieser Karbon-Nanoröhren ist praktisch nicht messbar.

Weiterhin kann das Erwärmen auch durch lokales Einleiten von Ultraschallwellen durchgeführt werden. Bei einem solchen Verfahren, das auch Ultraschallschweißen genannt wird, wird Wärme durch die Umwandlung von Ultraschallschwingungen in mechanische Schwingungen erzeugt. Über eine Schnittstelle in Form einer Sonotrode werden die Schwingungen einem oder beiden Fügepartnern zugeleitet. Dies führt zu Grenzflächen- und Molekularreibung, die zu einer lokalen Erwärmung führt. In dem vorliegenden Fall wäre es sinnvoll, das mindestens eine Versteifungsbauteil mit den Schallwellen zu beaufschlagen. Insbesondere durch sehr kurze, in einem bestimmten Muster getaktete Schallimpulse kann eine lokale, konzentrierte Erwärmung in dem Verbindungsbereich erreicht werden.

Das Abkühlen weist den Schritt des Aufrechterhaltens einer mäßigen Erwärmung des Verbindungsbereichs beim Abkühlen auf. Die Abkühlung des Verbindungsbereichs, in dem die Bauteile miteinander verschweißt wurden, wird folglich durch einen aufrechterhaltenen Wärmeeintrag beeinflusst. Dies könnte dadurch erfolgen, dass die leitfähige Schicht mit einer Steuereinheit verbunden sein, die mit einer Spannungsquelle verbunden ist. Eine Steuereinheit kann beispielsweise zum Durchführen einer für eine Verschweißung ausreichenden Erwärmung eine bestimmte Spannung an die elektrisch leitfähige Schicht anlegen oder eine bestimmte Stromstärke einstellen. Insbesondere bei einer maximalen Stromstärke wird eine maximale Heizleistung erreicht. Zum Zwecke der Abkühlung kann diese Heizleistung zumindest zu einem Zeitpunkt und über zumindest eine Zeitdauer reduziert werden. Die Heizleistung wird bevorzugt derart reduziert, dass der Wärmeverlust aus dem Verbindungsbereich nach außen die dann noch zugeführte Heizleistung übersteigt. Dies bedeutet, dass sich der Wärmeverlust deutlich gegenüber einem einfachen Trennen der leitfähigen Schicht verzögert. Dies führt zu einer sanfteren Abkühlung des Verbindungsbereichs, wodurch eventuelle Wärmespannungen und Ausdehnungseffekte noch weiter reduziert werden können. Es ist denkbar, dass die Steuereinheit dazu eingerichtet ist, mehrere Heizleistungsreduktionen während des Abkühlens durchzuführen. Die sinnvolle Anzahl derartiger Schritte sowie deren jeweilige Zeitdauer hängt von der Art und Beschaffenheit der Fügepartner ab. Bevorzugt könnte eine solche Steuereinheit dazu eingerichtet sein, basierend auf theoretisch oder experimentell bestimmten Abkühlungskurven die Anzahl der Heizleistungsreduktionsschritte sowie deren Zeitdauern zu bestimmen.

Das Verfahren umfasst das Auflegen einer elektrisch leitfähigen Schicht das Integrieren eines Sensordrahts, der mit einer Steuereinheit verbindbar ist, wobei die Steuereinheit eine Abkühlung durch Zuführen einer Wärmeleistung durch Zuführen einer elektrischen Leistung an die elektrisch leitfähige Schicht auf Basis einer mittels des Sensordrahts ermittelten Temperatur steuert. Der Sensordraht kann aus dem gleichen Material oder mit einer ähnlichen Materialbeschaffenheit bereitgestellt werden wie die elektrisch leitfähige Schicht. Ein solcher Sensordraht kann sich über einen bestimmten Teil der elektrisch leitfähigen Schicht erstrecken und kann von außen elektrisch mit der Steuereinheit verbunden werden. Der Sensordraht ist dazu ausgebildet, seinen elektrischen Widerstand in Abhängigkeit der Temperatur zu ändern. Die Steuereinheit kann auf Basis des gemessenen Widerstands die Temperatur in dem Verbindungsbereich ermitteln. Auf Basis der in dem Verbindungsbereich ermittelten Temperatur kann die Heizleistung zum geführten Abkühlen eingestellt werden. Hierdurch kann auf eine experimentelle oder theoretische Bestimmung von Abkühlungskurven im Wesentlichen verzichtet werden und die Abkühlung erfolgt direkt auf Basis einer momentanen Temperatur in dem Verbindungsbereich.

Der zusätzliche Schritt des Erwärmens und Verformens kann beispielhaft das Anbringen eines Formwerkzeugs an einer Innenseite des Hautfeldes und das Aufbringen einer verformenden Kraft nach außen, das heißt in Richtung der Außenseite des Hautfeldes, umfassen. Das Formwerkzeug kann beispielsweise an das mindestens eine Versteifungsbauteil angepasst sein und erlaubt nach der Wiedererwärmung eine leichte Formkorrektur.

Das Wiedererwärmen kann sich indes über einen größeren Bereich erstrecken als lediglich der Verbindungsbereich. Hierdurch können auch in benachbarten Bereichen Wärmespannungen abgebaut werden, so dass die vorgebbare Geometrie erreicht wird. Diese Wiedererwärmung kann insbesondere durch eine Heizeinrichtung erfolgen, die an dem Formwerkzeug angeordnet ist.

Die Erfindung betrifft ferner ein Fahrzeugbauteil, das mindestens ein Hautfeld und mindestens ein an einer Innenseite des Hautfeldes angeordnetes Versteifungsbauteil aufweist, wobei das Fahrzeugbauteil mit einem vorangehend erwähnten Verfahren hergestellt ist.

Außerdem betrifft die Erfindung ein Fahrzeug, welches mindestens ein derartiges Fahrzeugbauteil aufweist. Das Fahrzeug kann insbesondere ein Flugzeug und bevorzugt ein Verkehrsflugzeug sein.

Des Weiteren kann die Erfindung ein System betreffen, welches zum Herstellen eines Fahrzeugbauteils aus einem faserverstärkten Kunststoff eingerichtet ist. Das System kann eine Steuereinheit, ein Formwerkzeug, eine Heizeinrichtung und eine Messeinrichtung aufweisen. Die Steuereinheit könnte ferner mit einer Heizeinrichtung verbunden sein. Die Steuereinheit könnte dazu eingerichtet sein, die Heizeinrichtung zum Erwärmen eines Verbindungsbereichs zwischen dem vorangehend genannten Hautbauteil und dem mindestens einen Versteifungsbauteil anzusteuern und mittels der Messeinrichtung zu detektieren, ob nach dem Abkühlen eine über die Messeinrichtung ermittelte Geometrie von einer vorgebbaren Geometrie abweicht. Ist dies der Fall, kann die Steuereinrichtung das Formwerkzeug und die Heizeinrichtung derart ansteuern, dass eine Wiedererwärmung erfolgt und das Formwerkzeug eine Verformung durchführt.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt einen Teilschnitt eines Fahrzeugbauteils, welches im Begriff ist, hergestellt zu werden.
Fig. 2 zeigt eine Detailansicht eines Versteifungsbauteils mit einer darauf angeordneten leitfähigen Schicht zum Erwärmen eines Verbindungsbereichs.
Fig. 3 zeigt das Ausbreiten von Verstärkungsfasern bei der Herstellung eines Hautfeldes.
Fig. 4 zeigt eine Detailansicht eines Verbindungsbereichs eines Versteifungsbauteils.
Fig. 5 zeigt den Teilschnitt aus Fig. 1 mit einem daran angeordneten Versteifungsbauteil aus Fig. 4.
Fig. 6 zeigt eine blockbasierte Darstellung des erfindungsgemäßen Verfahrens.
Fig. 7 zeigt ein Flugzeug mit einem oder mehreren Fahrzeugbauteilen, die mit einem erfindungsgemäßen Verfahren hergestellt sind.

### DETAILLIERTE DARSTELLUNG EXEMPLARISCHER AUSFÜHRUNGSFORMEN

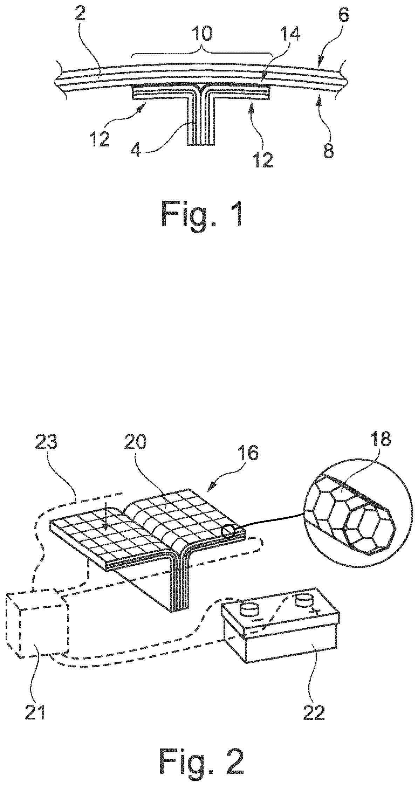

Fig. 1 zeigt ein Hautfeld 2 sowie ein Versteifungsbauteil 4 in einer schematischen Darstellung. Das Hautfeld 2 besitzt eine Außenseite 6, eine Innenseite 8 sowie einen dort vorgesehenen Aufnahmeabschnitt 10. Das Versteifungsbauteil 4 ist beispielhaft als ein Längsversteifungselement (Stringer) für eine Hautschale eines Flugzeugs ausgestaltet. Das Versteifungsbauteil 4 besitzt lediglich exemplarisch zwei Schenkel 12, die eine unterteilte Verbindungsfläche 14 bereitstellen. Die Verbindungsfläche 14 steht in einem Flächenkontakt mit dem Aufnahmeabschnitt 10 auf der Innenseite 8 des Hautfeldes 2.

Sowohl das Hautfeld 2 als auch das Versteifungselement 4 ist aus einem faserverstärkten, thermoplastischen Kunststoff hergestellt. Dies kann etwa ein PEEK oder PEKK mit eingebetteten Kohlenstofffasern als Verstärkungsfasern sein.

Die Verstärkungsfasern sind in dieser Darstellung lediglich angedeutet. Durch das Erwärmen eines Verbindungsbereichs zwischen dem Versteifungselement 4 und dem Hautfeld 2, der den Aufnahmeabschnitt 10 und die Verbindungsfläche 14 einschließt, können beide Bauteile 2 und 4 miteinander verschweißt werden. Hierdurch wird bereichsweise ein thermoplastisches Matrixmaterial aufgeschmolzen, so dass lokal in dem Fügebereich eine Durchmischung des Materials der beiden Komponenten 2 und 4 erfolgt. Nach dem Abkühlen liegt folglich ein praktisch monolithischer Verbund vor.

Eine lokale Erwärmung kann insbesondere durch Anordnen einer elektrisch leitfähigen Schicht 16 erfolgen. Diese wird in Fig. 2 aus einem Netz aus Karbon-Nanoröhren 18 dargestellt, die mehrere Maschen 20 aufweisen. Durch Verbinden der elektrisch leitfähigen Schicht 16 mit einer Spannungsquelle 22 erwärmt sich die Schicht 16, so dass ausschließlich in dem Fügebereich eine Erwärmung durchgeführt wird.

Die Erwärmung kann durch eine optionale Steuereinheit 21 gesteuert werden. Die Steuereinheit 21 sowie entsprechende Anschlussleitungen sind gestrichelt dargestellt. Desweiteren kann beim Abkühlen des Verbindungsbereichs eine leichte Erwärmung beibehalten werden, so dass die Abkühlung sanfter erfolgt. Dies kann insbesondere durch die Steuereinheit 21 durch Reduzieren der Stromzufuhr realisiert werden.

Weiter optional kann ein Sensordraht 23 vorgesehen sein, mit dessen Hilfe von der Steuereinheit 21 die Temperatur im Innern des Verbindungsbereichs überwacht werden kann. Auf Basis dieser Überwachung kann eine Steuerung der Abkühlung erfolgen.

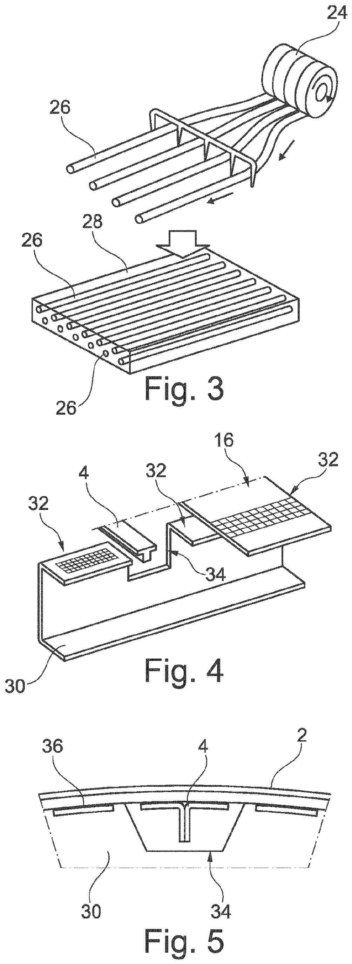

Eine besonders vorteilhafte Oberflächenqualität wird dann erreicht, wenn die Fasern der Komponenten 2 und 4 parallel zueinander ausgerichtet sind und keine besondere Welligkeit aufweisen. Hierzu wird in Fig. 3 dargestellt, dass Faserstränge 24 zum Herstellen insbesondere des Hautfeldes 2 durch Kämmen ausgebreitet werden können. Dadurch werden perfekt parallel zueinander sowie nebeneinander ausgerichtete Fasern 26 bereitgestellt, die in ein thermoplastisches Matrixmaterial 28 eingebunden werden können. Es ist vorstellbar, mehrere Schichten eines faserverstärkten Materials aus dem thermoplastischen Kunststoff und mit gekämmten Fasern herzustellen und diese bahn- oder bandförmig zusammenzusetzen.

Fig. 4 zeigt eine Variante eines Versteifungsbauteils 30 mit mehreren Abschnitten 32 oder Segmenten einer Verbindungsfläche, die mit dem vorangehend dargestellten Netz aus Karbon-Nanoröhren versehen sind. Das Versteifungsbauteil 30 kann ferner exemplarisch einen Ausschnitt 34 aufweisen, durch den ein Versteifungsbauteil 4 gemäß Fig. 1 verlaufen kann. Das Versteifungsbauteil 30 könnte daher ein Teil eines Rumpfspants sein, das Versteifungsbauteil 4 hingegen ein Teil eines Längsversteifungselements (Stringer).

Die Elemente aus Fig. 4 sind in Fig. 5 in zusammengesetzter Form mit einer Hautfeld 2 dargestellt, welches einen Teil einer Rumpfhaut bilden kann. Die mit einer durchgehenden dunklen Linie gekennzeichnete Fläche kann als Verbindungsbereich 36 interpretiert werden, in dem die Verschweißung durchgeführt ist.

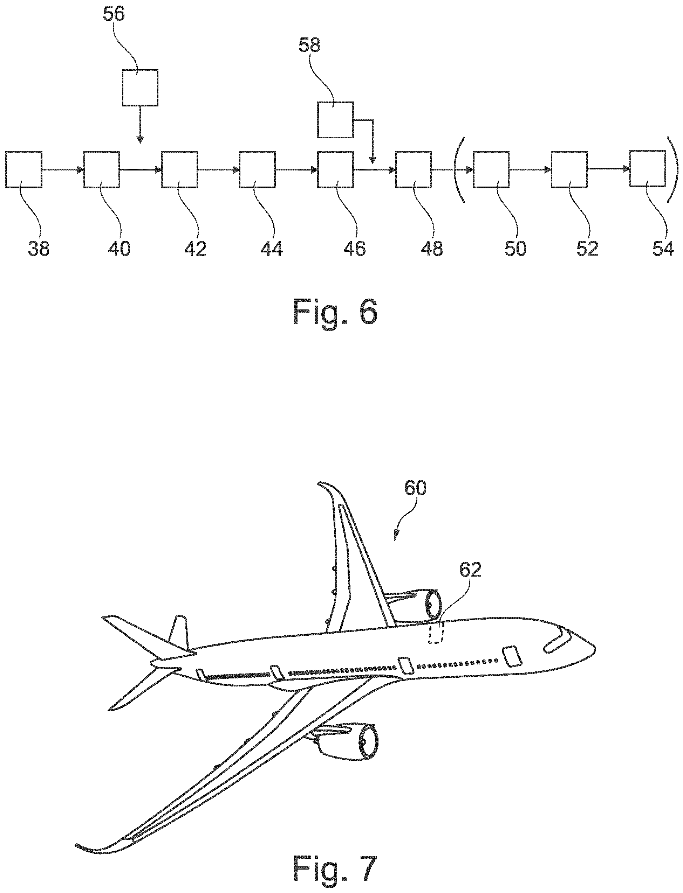

In Fig. 6 wird schematisch in Form eines Blockdiagramms das erfindungsgemäße Verfahren gezeigt. Das Verfahren weist die Schritte des Bereitstellens 38 mindestens eines Hautfeldes 2 mit einer Innenseite 8, einer Außenseite 6 und einem an der Innenseite8 angeordneten Aufnahmeabschnitt 10, des Bereitstellens 40 mindestens eines Versteifungsbauteils mit einer Verbindungsfläche 14, des Kontaktierens 42 des mindestens einen Versteifungsbauteils und des mindestens einen Hautfeldes, so dass die Verbindungsfläche auf dem Aufnahmeabschnitt liegt, des flächigen Erwärmens 44 einer Fügezone, in der die Verbindungsfläche des Versteifungsbauteils und der Aufnahmeabschnitt liegen, so dass das mindestens eine Versteifungsbauteil und das mindestens eine Hautfeld miteinander verschweißt werden, des Abkühlens 46 der Fügezone, des Vergleichens 48 einer ermittelten Geometrie der Kombination aus Versteifungsbauteil und Hautfeld mit einer vorgebbaren Geometrie, und des erneuten Erwärmens 50 der Fügezone, sowie des Verformen 52 des Versteifungsbauteils und des Hautfeldes und des Abkühlen 54 zum Erreichen der vorgebbaren Geometrie, falls die ermittelte Geometrie von der vorgebbaren Geometrie abweicht. Das Verfahren kann weiterhin das Auflegen 56 einer leitfähigen Schicht auf die Verbindungsfläche und/oder den Aufnahmeabschnitt beinhalten. Beim Abkühlen 46 kann weiterhin auch eine mäßige Erwärmung des Verbindungsbereichs aufrechterhalten werden 58.

Schließlich offenbart Fig. 7 ein Verkehrsflugzeug 60, welches mindestens ein durch das erfindungsgemäße Verfahren hergestelltes Bauteil 62 besitzt. Dieses ist lediglich exemplarisch mit einer gestrichelten Linie gekennzeichnet. Es sind sämtliche anderen Bauteile ebenso mit einem erfindungsgemäßen Verfahren herstellbar.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Verfahren zum Herstellen eines Fahrzeugbauteils aus einem faserverstärkten Kunststoff, aufweisend die Schritte:
- Bereitstellen (38) mindestens eines Hautfeldes (2) mit einer Innenseite (8), einer Außenseite (6) und einem an der Innenseite (8) angeordneten Aufnahmeabschnitt (10), wobei das Hautfeld (2) aus einem faserverstärkten, thermoplastischen Werkstoff besteht,
- Bereitstellen (40) mindestens eines Versteifungsbauteils (4, 30) mit einer Verbindungsfläche (14), wobei das Versteifungsbauteil (4, 30) aus einem faserverstärkten, thermoplastischen Werkstoff besteht,
- Kontaktieren (42) des mindestens einen Versteifungsbauteils (4, 30) und des mindestens einen Hautfeldes (2), so dass die Verbindungsfläche (14) auf dem Aufnahmeabschnitt (10) liegt,
- Flächiges Erwärmen (44) einer Fügezone, in der die Verbindungsfläche (14) des Versteifungsbauteils (4, 30) und der Aufnahmeabschnitt (10) liegen, so dass das mindestens eine Versteifungsbauteil (4, 30) und das mindestens eine Hautfeld (2) miteinander verschweißt werden,
- Abkühlen (46) der Fügezone,
- Vergleichen (48) einer ermittelten Geometrie der Kombination aus Versteifungsbauteil (4, 30) und Hautfeld (2) mit einer vorgebbaren Geometrie, und
- Erneutes Erwärmen (50) der Fügezone, Verformen (52) des Versteifungsbauteils (4, 30) und des Hautfeldes (2) und Abkühlen (54) zum Erreichen der vorgebbaren Geometrie, falls die ermittelte Geometrie von der vorgebbaren Geometrie abweicht,
- ferner aufweisend den Schritt des Auflegens einer leitfähigen Schicht (16) auf die Verbindungsfläche (14) und/oder den Aufnahmeabschnitt (10),
- wobei das flächige Erwärmen das Anlegen einer Spannung über die leitfähige Schicht (16) beinhaltet,
**dadurch gekennzeichnet, dass**
- das Auflegen einer elektrisch leitfähigen Schicht (16) das Integrieren eines Sensordrahts (23) beinhaltet, der mit einer Steuereinheit (21) verbindbar ist,
- wobei das Abkühlen den Schritt des Aufrechterhaltens einer mäßigen Erwärmung der Fügezone beim Abkühlen aufweist, und J
- wobei die Steuereinheit (21) eine Abkühlung durch Zuführen einer Wärmeleistung durch Zuführen einer elektrischen Leistung an die elektrisch leitfähige Schicht (16) auf Basis einer mittels des Sensordraht (23) ermittelten Temperatur steuert.

2. Verfahren nach Anspruch 1,
wobei das Bereitstellen des mindestens einen Hautfeldes (2) das parallele Ausbreiten von Verstärkungsfasern (26) und das Einbetten der Verstärkungsfasern (26) in einem thermoplastischen Matrixmaterial aufweist.

3. Verfahren nach Anspruch 1,
wobei die leitfähige Schicht (16) in Form eines Netzes aus linienförmigen Elementen aus einem Kohlenstoff enthaltenden Material hergestellt ist.

4. Verfahren nach Anspruch 1 oder 3,
wobei die leitfähige Schicht (16) aus einem Netz aus Karbon-Nanoröhrchen besteht.

5. Verfahren nach Anspruch 1 oder 2,
wobei das Erwärmen das lokale Einleiten von Ultraschallwellen aufweist.

6. Verfahren nach einem der vorhergehenden Ansprüche,
wobei der zusätzliche Schritt des Erwärmens und Verformens das Anbringen eines Formwerkzeugs an einer Innenseite des Hautfeldes (2) und das Aufbringen einer verformenden Kraft nach außen umfasst.

7. Fahrzeugbauteil, welches mindestens ein Hautfeld (2) und mindestens ein an einer Innenseite des Hautfeldes (2) angeordnetes Versteifungsbauteil (4, 30) aufweist, wobei das Fahrzeugbauteil mit einem Verfahren nach einem der Ansprüche 1 bis 6 hergestellt ist.

8. Fahrzeug (60), aufweisend mindestens ein Fahrzeugbauteil nach Anspruch

9. (60) nach Anspruch 8, wobei das Fahrzeug (60) ein Flugzeug (60) ist.

## Claims

1. A method for producing a vehicle component from a fiber-reinforced plastic, comprising the steps:
- Providing (38) at least one skin area (2) with an inside (8), an outside (6) and a receiving section (10) arranged on the inside (8), the skin area (2) being made of a fiber-reinforced, thermoplastic material,
- Provision (40) of at least one stiffening component (4, 30) with a connecting surface (14), wherein the stiffening component (4, 30) consists of a fiber-reinforced, thermoplastic material,
- Contacting (42) the at least one stiffening component (4, 30) and the at least one skin area (2) so that the connecting surface (14) lies on the receiving section (10),
- Surface heating (44) of a joining zone in which the connecting surface (14) of the stiffening component (4, 30) and the receiving section (10) are located, so that the at least one stiffening component (4, 30) and the at least one skin area (2) are welded together,
- cooling (46) of the joining zone,
- comparing (48) a determined geometry of the combination of stiffening component (4, 30) and skin area (2) with a predeterminable geometry, and
- Renewed heating (50) of the joining zone, deformation (52) of the stiffening component (4, 30) and the skin area (2) and cooling (54) to achieve the predeterminable geometry, if the determined geometry deviates from the predeterminable geometry,
- further comprising the step of placing a conductive layer (16) on the connecting surface (14) and / or the receiving section (10),
- wherein the surface heating includes the application of a voltage across the conductive layer (16),
**characterized in that**
- the application of an electrically conductive layer (16) includes the integration of a sensor wire (23) which can be connected to a control unit (21),
- Wherein the cooling comprises the step of maintaining a moderate heating of the joining zone during cooling, and
- wherein the control unit (21) controls cooling by supplying thermal power by supplying electrical power to the electrically conductive layer (16) on the basis of a temperature determined by means of the sensor wire (23).

2. The method according to claim 1,
whereby the provision of the at least one skin area (2) comprises the parallel spreading of reinforcing fibers (26) and the embedding of the reinforcing fibers (26) in a thermoplastic matrix material.

3. The method according to claim 1,
wherein the conductive layer (16) is made in the form of a network of linear elements made of a material containing carbon.

4. The method according to claim 1 or 3,
wherein the conductive layer (16) consists of a network of carbon nanotubes.

5. The method according to claim 1 or 2,
wherein the heating comprises introducing ultrasonic waves locally.

6. The method according to any one of the preceding claims,
wherein the additional step of heating and deforming comprises attaching a molding tool to an inside of the skin panel (2) and applying a deforming force to the outside.

7. A vehicle component which has at least one skin field (2) and at least one stiffening component (4, 30) arranged on an inside of the skin field (2), the vehicle component being produced by a method according to one of claims 1 to 6.

8. The vehicle (60) comprising at least one vehicle component according to claim 7.

9. The vehicle (60) of claim 8, wherein the vehicle (60) is an aircraft (60).

## Revendications

1. Procédé de production d'un composant de véhicule à partir d'un plastique renforcé de fibres, comprenant les étapes:
- prévoir (38) au moins une zone cutanée (2) avec une partie intérieure (8), une partie extérieure (6) et une partie réceptrice (10) disposées à l'intérieur (8), la zone cutanée (2) étant constituée d'un matière thermoplastique renforcée de fibres,
- Fourniture (40) d'au moins un élément de raidissement (4, 30) avec une surface de liaison (14), dans lequel le composant de raidissement (4, 30) est constitué d'un matériau thermoplastique renforcé de fibres,
- mise en contact (42) du au moins un élément de raidissement (4, 30) et de la au moins une zone de peau (2) de sorte que la surface de liaison (14) repose sur le tronçon de réception (10),
- Chauffage de surface (44) d'une zone de jonction dans laquelle se trouvent la surface de liaison (14) du composant de raidissement (4, 30) et le tronçon de réception (10), de sorte que le au moins un composant de rigidification (4, 30) et la au moins une zone de peau (2) est soudée ensemble,
- refroidissement (46) de la zone de jonction,
- comparer (48) une géométrie déterminée de la combinaison du composant de raidissement (4, 30) et de la zone de peau (2) avec une géométrie prédéterminable, et
- chauffage renouvelé (50) de la zone de jonction, déformation (52) du composant de raidissement (4, 30) et de la zone de peau (2) et refroidissement (54) pour atteindre la géométrie prédéterminable, si la géométrie déterminée s'écarte de la géométrie prédéterminée géométrie,
- comprenant en outre l'étape de mise en place d'une couche conductrice (16) sur la surface de connexion (14) et / ou la section de réception (10),
- dans lequel le chauffage de surface comprend l'application d'une tension aux bornes de la couche conductrice (16),
**caractérisé en ce que**
- l'application d'une couche électriquement conductrice (16) comprend l'intégration d'un fil de capteur (23) qui peut être connecté à une unité de commande (21),
- dans lequel le refroidissement comprend l'étape de maintien d'un chauffage modéré de la zone de jonction pendant le refroidissement, et
- dans lequel l'unité de commande (21) commande le refroidissement en fournissant de l'énergie thermique en fournissant de l'énergie électrique à la couche électriquement conductrice (16) sur la base d'une température déterminée au moyen du fil de capteur (23).

2. Procédé selon la revendication 1,
grâce à quoi la fourniture d'au moins une zone de peau (2) comprend l'étalement parallèle de fibres de renforcement (26) et l'enrobage des fibres de renforcement (26) dans un matériau de matrice thermoplastique.

3. Procédé selon la revendication 1,
dans lequel la couche conductrice (16) est réalisée sous la forme d'un réseau d'éléments linéaires en un matériau contenant du carbone.

4. Procédé selon la revendication 1 ou 3,
dans lequel la couche conductrice (16) consiste en un réseau de nanotubes de carbone.

5. Procédé selon la revendication 1 ou 2,
dans lequel le chauffage comprend l'introduction d'ondes ultrasonores localement.

6. Procédé selon l'une quelconque des revendications précédentes,
dans lequel l'étape supplémentaire de chauffage et de déformation comprend la fixation d'un outil de moulage à l'intérieur du panneau de peau (2) et l'application d'une force de déformation à l'extérieur.

7. Un composant de véhicule qui a au moins un champ de peau (2) et au moins un composant de raidissement (4, 30) disposés à l'intérieur du champ de peau (2), le composant de véhicule étant produit par un procédé selon l'un des revendications 1 à 6.

8. Véhicule (60) comprenant au moins un élément de véhicule selon la revendication 7.

9. Véhicule (60) selon la revendication 8, dans lequel le véhicule (60) est un aéronef (60).
